# EUROPÄISCHE PATENTSCHRIFT

(11) **EP 3 652 677 B1**
(45) Veröffentlichungstag und Bekanntmachung des Hinweises auf die Patenterteilung: **06.07.2022**
(21) Anmeldenummer: 18731870.4
(22) Anmeldetag: 25.06.2018
(51) Int. Cl.: G06K 19/10, G06K 9/00, G07D 7/00, B42D 25/305, H04L 9/32

(54) **VERFAHREN ZUM SCHÜTZEN EINES PRODUKTES GEGEN FÄLSCHUNGEN**
METHOD FOR PROTECTING A PRODUCT AGAINST FORGERY
PROCÉDÉ DE PROTECTION D'UN PRODUIT CONTRE LES FALSIFICATIONS

(30) Priorität: 14.07.2017 EP 17181511
(43) Veröffentlichungstag der Anmeldung: 20.05.2020
(73) Patentinhaber: AR Packaging GmbH, 65830 Kriftel (DE)
(72) Erfinder: MACK, Ralf, 81827 München (DE); MISOF, Peter, 86517 Wehringen (DE)
(74) Vertreter: Hauck Patentanwaltspartnerschaft mbB
(86) Internationale Anmeldenummer: PCT/EP2018/066894
(87) Internationale Veröffentlichungsnummer: WO 2019/011632

(56) Entgegenhaltungen:
- WO-A2-2006/087351
- DE-A1- 10 253 096
- DE-A1- 10 304 805
- DE-A1-102006 011 143
- US-A1- 2002 023 218
- US-A1- 2016 307 035
- US-A1- 2016 379 358
- US-B1- 8 171 567

## Beschreibung

Die Erfindung betrifft ein Verfahren zum Schützen eines Produktes gegen Fälschungen.

Produktfälschungen verursachen erhebliche wirtschaftliche Schäden. Aufgrund von Mängeln gefälschter Produkte kann es zudem zu Funktionseinbußen und technischem Versagen kommen. Gefälschte Babynahrung, Pharmazeutika und Nahrungs- und Genussmittel können zu schweren gesundheitlichen Schäden und sogar Todesfällen führen. Deshalb wird nach Lösungen gesucht, Produktfälschungen einfach und sicher zu erkennen.

Bekannt ist, Produkte zum Schutz gegen Fälschungen mit individualisierenden Sicherheitsmerkmalen zu versehen. Beispielsweise werden Produkte mit individuellen Produktnummern gekennzeichnet, die von Händlern, Verbrauchern, Markenherstellern und Ermittlern durch Online-Abfrage einer Datenbank für eine Echtheitsprüfung herangezogen werden können. Festgestellt wurde, dass Fälscher die Produktcodes in Handelsfilialen abfotografieren und mittels Digitaldruck auf falsche Verpackungen aufbringen, die dann als Originalprodukt verkauft werden.

Weiterentwickelte Fälschungssicherungen sollen derartige Fälschungen unterbinden. Hierzu ist bekannt, das Originalprodukt mit einem durch eine individuelle Anordnung aus bunten Fasern mikrostrukturierten Papieretikett und einem darauf aufgedruckten Produktcode zu versehen. Zur Verifizierung der Authentizität des Produktes werden Mikrostruktur und Produktcode mittels Smartphone mit Kamera und mobiler App erfasst und mit einer Datenbank abgeglichen, in der Produktcode und Mikrostruktur des Originalprodukts hinterlegt sind.

Das Herstellen und Anbringen der Fälschungssicherungen am Produkt oder seiner Verpackung ist aufwendig. Ferner wird das optische Erscheinungsbild beeinträchtigt.

Die US 2015/0014983 A1 beschreibt eine Markierung für den Fälschungsschutz, die einen druckbaren Code umfasst, der zumindest teilweise von einer transparenten Zwischenschicht enthaltend zumindest einen Typ von zufällig verteilten Flocken bedeckt ist, wobei die transparente Zwischenschicht zumindest teilweise von einer Schicht aus einem chiralen Flüssigkristallpolymer (CLCP) bedeckt ist. Der Code wird mittels einer Kamera eines Mobilphones gelesen und mit abgespeicherten Informationen verglichen. Die CLCP-Schicht soll durch einen Glanzeffekt einen Kopierschutz bewirken.

Die DE 10 2011 012 274 A1 beschreibt ein Verfahren zum drucktechnischen Erzeugen einer strukturierten Fläche, wobei eine Flüssigkeit und Partikel auf ein Substrat aufgebracht werden und durch Blasen eines Gases auf die ungehärtete Flüssigkeit eine stochastische Oberflächen-Strukturierung der Flüssigkeit und eine stochastische Partikel-Verteilung erzeugt wird. Das Sicherheitsmerkmal soll nur sehr schwer von einem potentiellen Fälscher nachzuahmen sein, da es eine äußere, offene 3D-Struktur der Oberfläche ("Berg-Tal-Effekt") und eine innere, verdeckte Struktur der Partikelverteilung (variabler "Glitzer-Effekt") aufweist. Ein einfaches Kopieren des Merkmals auf heute üblichen Kopierern soll somit ausgeschlossen sein. Das Verfahren erfordert eine spezielle Druckmaschine, die mit einer Vorrichtung zum Anblasen ausgerüstet ist.

Die US 2011/0183710 A1 beschreibt ein eindeutiges Etikett zum Verhindern von Fälschungen und Identifizieren eines Produktes, bei dem auf einem transparenten Blatt eine Vielzahl ausgestanzter Partikel verschiedener Größen im Bereich von 10 bis 4000 µm in zufälliger Ausrichtung angeordnet sind. Die Teilchen werden während der Produktion oder Verpackung mittels einer optischen Bilderfassungseinrichtung erfasst und die Daten der Teilchen werden in einer zentralen Datenbank hinterlegt. Die Datenbank ist zugänglich, um die Originalität des Produktes zu verifizieren, an dem das eindeutige Etikett angebracht ist. Die Herstellung des Etiketts ist aufwendig.

Weitere Verfahren und Vorrichtungen zur Authentifizierung von Gegenständen mittels stochastischer Strukturen sind aus der US 8,171,567 B1, US 2016/307035 A1 und US 2002/023218 A1 bekannt.

Die weiterentwickelten Fälschungssicherungen mit stochastischen Strukturen können fotografiert und auf gefälschte Verpackungen aufgedruckt werden. Eine Digitalkamera kann die stochastischen Strukturen auch auf dem aufgedruckten Foto erfassen, so dass die Kopie beim Abgleich der Daten nicht auffällt.

Das Dokument "Where are pharmaceutical anti-counterfighting technologies headed?", Herbst 2015, Autor: Dr. Fred Jordan, beschreibt zur Vermeidung von Produktfälschungen das Anbringen einmaliger Identifikatoren wie eines Matrix- oder 2D-Barcodes oder eines RFID, oder das Anbringen von Sicherheitsmerkmalen wie offener oder versteckter Sicherheitsmerkmale. Zu den versteckten Sicherheitsmerkmalen gehören unsichtbare Aufdrucke von Spezialfarben oder von normalen Farben oder von Lacken mit einem pseudozufälligen Muster von Mikropunkten oder Mikrolöchern.

Die WO 2006/087351 A1 beschreibt ein Verfahren zum Authentifizieren und Nachverfolgen industriell bedruckten Materials durch Anbringen einer für das nackte Auge unsichtbaren Kennung basierend auf der Hinzufügung von pseudozufälligen Fehlern der Oberfläche des Materials mittels industrieller Drucktechnologie basierend auf der Ablagerung von flüssigen, beim Trocknen sich verfestigenden Substanzen wie Farbe, Lack, Kunststoff oder Klebstoffbeschichtung.

Die US 2016/0379358 A1 beschreibt ein Verfahren zur automatischen Authentifizierung eines Objekts durch Vergleich einiger Objektbilder mit Referenzbildern, wobei die Objektbilder dadurch gekennzeichnet sind, dass zum Vergleich verwendete visuelle Elemente für das bloße Auge nicht störend sind. Bei einigen beschriebenen Lösungen werden dem Bediener sichtbare Merkmale zur Verfügung gestellt, um den abzubildenden Bereich zu lokalisieren. Vorgeschlagen werden Wege für die Echtzeit-Implementierung, die eine benutzerfreundliche Erkennung mit mobilen Geräten wie Smartphones ermöglichen.

Davon ausgehend liegt der Erfindung die Aufgabe zugrunde, ein sichereres Verfahren zum Schützen eines Produktes gegen Fälschungen zur Verfügung zu stellen.

Die Aufgabe wird erfindungsgemäß durch ein Verfahren mit den Merkmalen von Anspruch 1 gelöst. Vorteilhafte Ausgestaltungen des Verfahrens sind den Unteransprüchen angegeben.

Erfindungsgemäß wird auf ein Verpackungsmaterial eine Schicht aufgedruckt, die als individualisierendes Sicherheitsmerkmal chaotisch angeordnete Strukturen aufweist. Hierbei handelt es sich um Strukturen, die optisch erfassbar sind. Die Strukturen werden in dieser Anmeldung auch als "Mikrostrukturen" bezeichnet. Gemäß einer bevorzugten Ausführungsart liegen die Abmessungen der Strukturen im Bereich von 1 bis 1.000 µm. Gemäß einer weiteren Ausführungsart weisen die Strukturen kleinere oder größere Abmessungen als 1 bis 1.000 µm auf oder umfassen auch Strukturen mit Abmessungen kleiner oder größer als 1 bis 1.000 µm. Ferner wird auf das Verpackungsmaterial ein optisch erfassbarer Produktcode aufgedruckt. Der Produktcode enthält beispielsweise eine oder mehrere der nachfolgenden Informationen: Chargennummer, Produktnummer, Produktionszeitpunkt, Abfüllanlagennummer, Haltbarkeitsdaten und andere Produkt- und produktionsspezifische Daten. Als weiteres Sicherheitsmerkmal wird auf das Verpackungsmaterial eine Sonderfarbe aufgedruckt, die nicht in den CMYK-Farbraum fällt. CMYK (Englisch: Cyan, Magenta, Yellow, Key; Key steht für Black/Schwarz) sind die standardisierten Grundfarben für den Vierfarbendruck. Durch Aufdrucken einer oder mehrerer dieser Farben neben- und/oder übereinander auf den Bedruckstoff lassen sich sehr viele unterschiedliche Farben erzeugen. Die Farbe Schwarz wird zusätzlich verwendet, da sich durch Übereinanderdrucken von Cyan, Magenta und Gelb kein richtiges Schwarz erzeugen lässt. Die mittels der standardisierten Grundfarben CMYK darstellbaren Farben werden als CMYK-Farbraum bezeichnet. Beim Mehrfarbdruck werden beliebige andere Farben als CMYK als "Sonderfarben" oder "Schmuckfarben" bezeichnet. Eine Sonderfarbe kann in den CMYK-Farbraum fallen oder nicht in den CMYK-Farbraum fallen. Die Erfindung verwendet als weiteres Sicherheitsmerkmal eine Sonderfarbe, die nicht in den CMYK-Farbraum fällt. Die Sonderfarbe, die nicht in den CMYK-Farbraum fällt, wird in dieser Anmeldung auch als "Sonderfarbe außerhalb des CMYK-Farbraumes"oder als "aufgedruckte Sonderfarbe" bezeichnet. Die Sonderfarbe, die nicht in den CMYK-Farbraum fällt, ist zwar mittels üblicher Digitalkameras, Scanner oder anderer optoelektrischer Erfassungseinrichtungen optisch erfassbar und auf üblichen Monitoren darstellbar. Sie ist jedoch nicht mittels Vierfarbdruckern druckbar, die im CMYK-Farbraum arbeiten. Infolgedessen kann das weitere Sicherheitsmerkmal nicht auf einfache Weise kopiert werden. In einem weiteren Schritt werden die chaotisch angeordneten Strukturen erfasst und gemeinsam mit dem Produktcode und der Sonderfarbe außerhalb des CMYK-Farbraumes als Informationen über ein bestimmtes originales Verpackungsmaterial in einer Datenbank abgelegt. Die Erfassung der Strukturen erfolgt dabei vorzugsweise über eine optoelektronische Erfassungseinrichtung. Der Produktcode und/oder die aufgedruckte Sonderfarbe können ebenfalls mittels einer optoelektronischen Erfassungseinrichtung optisch erfasst werden. Da diese Informationen jedoch bereits vorliegen, können sie auch ohne besondere Erfassung in der Datenbank abgelegt werden. Eine Authentifizierung des Produktes kann auf einfache Weise dadurch erfolgen, dass mittels einer optoelektronischen Erfassungseinrichtung die chaotisch angeordneten Strukturen, der Produktcode und die aufgedruckte Sonderfarbe erfasst werden und an einen Rechner übermittelt werden. Der Rechner überprüft unter Rückgriff auf die Datenbank, ob die übermittelten Informationen mit den für ein bestimmtes Verpackungsmaterial abgelegten Informationen übereinstimmen. Im Falle der Übereinstimmung ist das Produkt echt, ansonsten eine Fälschung.

Gemäß einer Ausführungsart der Erfindung sind die Strukturen und/oder der Produktcode und/oder die Sonderfarbe außerhalb des CMYK-Farbraumes von außen optisch erfassbar, sodass das Verpackungsmaterial bzw. die daraus gebildete Verpackung zum optischen Erfassen der jeweiligen Informationen nicht geöffnet oder vom Produkt gelöst werden muss.

Gemäß einer weiteren Ausführungsart wird ein Produkt mit dem Verpackungsmaterial verbunden. Dadurch, dass das Produkt in dem Verpackungsmaterial verbunden ist, ist das Produkt gegen Fälschungen geschützt. Gemäß einer weiteren Ausführungsart wird das Produkt mit dem Verpackungsmaterial verpackt, das Verpackungsmaterial auf dem Produkt festgeklebt oder auf andere Weise daran fixiert. Gemäß einer bevorzugten Ausführungsart ist das Verpackungsmaterial so ausgebildet, dass nur nach zumindest teilweiser Zerstörung des Verpackungsmaterials das Produkt aus dem Verpackungsmaterial entnommen oder vom Verpackungsmaterial gelöst werden kann. An einem teilweise zerstörten Verpackungsmaterial ist ein möglicherweise gefälschtes Produkt erkennbar. Gemäß einer bevorzugten Ausführungsart weist das Verpackungsmaterial einen Originalitätsverschluss auf, d.h. einen Verschluss, der nur nach Zerstörung geöffnet werden kann. Gemäß einer bevorzugten Ausführungsart werden die Schritte 1.1 bis 1.3 des erfindungsgemäßen Verfahrens vor dem Verpacken des Produktes mit dem Verpackungsmaterial durchgeführt. Gegebenenfalls kann der Schritt 1.2 auch nach dem Verpacken des Produktes in dem Verpackungsmaterial durchgeführt werden. Ferner kann das Erfassen der chaotisch angeordneten Strukturen und/oder Abspeichern gemeinsam mit dem Produktcode und der aufgedruckten Sonderfarbe in der Datenbank vor oder nach dem Verpacken des Produktes mit dem Verpackungsmaterial erfolgen. In dem Verpackungsmaterial verpackt gelangt das Produkt an den Abnehmer, gegebenenfalls über den Handel.

Gemäß einer anderen Ausführungsart ist das Verpackungsmaterial selber das Produkt, das durch das erfindungsgemäße Verfahren gegen Fälschungen geschützt wird. Bei dieser Ausführungsart kann der Befüller vor dem Verpacken seines Produktes mit dem Verpackungsmaterial prüfen, ob das Verpackungsmaterial echt oder gefälscht ist.

Gemäß einer weiteren Ausführungsart ist die Datenbank Bestandteil eines Datenbankservers oder eines Cloudservers und über das Internet zugänglich. Die gemäß Schritt 1.4 des Verfahrens erfassten Informationen werden über das Internet in der Datenbank abgelegt, gegebenenfalls nach Zwischenspeicherung beim Hersteller des Verpackungsmaterials oder beim Befüller. Gemäß einer weiteren Ausführungsart werden die gemäß Schritt 1.5 erfassten Informationen zur Authentifizierung des Produktes über das Internet an den Rechner übermittelt.

Gemäß einer weiteren Ausführungsart werden in Schritt 1.6. die Informationen zur Authentifizierung des Produktes über eine Kommunikationseinrichtung an den Rechner übermittelt. Hierdurch wird die Überprüfung der Echtheit mittels eines räumlich entfernten Rechners oder Rechnernetzes ermöglicht. Gemäß einer weiteren Ausführungsart wird das Ergebnis der Überprüfung an die Kommunikationseinrichtung zurückübermittelt, über die die von der elektrooptischen Erfassungseinrichtung erfassten Informationen an den Rechner übermittelt wurden. Hierdurch werden die Ergebnisse der Überprüfung dem Abnehmer oder dem Handel auf einfache Weise zur Verfügung gestellt. Gemäß einer weiteren Ausführungsart ist die Kommunikationseinrichtung eine drahtlose Kommunikationseinrichtung. Alternativ ist sie eine drahtgebundene Kommunikationseinrichtung.

Das Verfahren ist mittels herkömmlicher Druckmaschinen, optoelektronischer Erfassungseinrichtungen, Kommunikationseinrichtungen und Rechner durchführbar. Insbesondere können die Schicht und die Sonderfarbe außerhalb des CMYK-Farbraumes mittels herkömmlicher Farbwerke und/oder Lackierwerke aufgedruckt werden. Ferner können herkömmliche Verpackungsmaschinen zum Verpacken des Produktes mit dem Verpackungsmaterial verwendet werden. Handelsübliche Mobiltelefone, Smartphones, Tablets, Personal Digital Assistants (PDA) können als kombinierte optoelektronische Erfassungseinrichtung und drahtlose Kommunikationseinrichtung genutzt werden. Als optische Erfassungseinrichtungen sind Scannerkassen nutzbar. Als Rechner können bestehende Datenbankserver oder Cloudserver in das Verfahren eingebunden werden. Hohe Investitionen müssen nicht getätigt werden.

Gemäß einer anderen Ausführungsart ist die Datenbank eine Speicherkarte oder ein anderes Speichermedium, das mit einer Authentifizierungsvorrichtung verwendet wird, die eine optoelektronische Erfassungseinrichtung und einen Rechner umfasst. Diese Ausführungsart kann insbesondere verwendet werden, wenn die Infrastruktur für die drahtlose oder drahtgebundene Kommunikation mit einem Rechner fehlt. Die Authentifizierungsvorrichtung kann als Handgerät ausgebildet sein. Die Speicherkarte kann autorisierten Händlern zur Verfügung gestellt werden, die diese in die Authentifizierungsvorrichtung einsetzen, um die Überprüfung der Echtheit von Produkten vorzunehmen. Jedem autorisierten Händler kann eine einzigartige Speicherkarte zur Verfügung gestellt werden, die nur die Daten zu den Produkten enthält, die an diesen Händler geliefert werden. Die Authentifizierungsvorrichtung kann das Ergebnis der Überprüfung anzeigen. Alternativ können die Daten den Händlern per Download in verschlüsselter Form zur Verfügung gestellt werden.

Gemäß einer bevorzugten Ausführungsart ist das Verpackungsmaterial ein bahnförmiges oder ein bogenförmiges bedruckbares Substrat (Bedruckstoff). Das bahnförmige Substrat ist in einer Rollendruckmaschine und das bogenförmige Substrat in einer Bogendruckmaschine verarbeitbar. Gemäß einer weiteren Ausführungsart ist das Substrat ein Karton, Pappe, Papier, Kunststofffolie, Metallfolie, Verbundfolie oder ein anderes flexibles Flachmaterial. Gemäß einer weiteren Ausführungsart umfasst das Substrat mindestens eine Schicht ausgewählt aus den folgenden Materialien: Papier, Karton, Pappe, Kunststoff oder Metall. Das Substrat kann insbesondere aus einer oder mehreren Schichten eines einzigen der vorgenannten Materialien oder aus mehreren Schichten verschiedener vorgenannter Materialien bestehen. Die mehreren Schichten können insbesondere durch Kaschieren, Laminieren oder Aufextrudieren zu einem mehrschichtigen Substrat vereinigt werden.

Gemäß einer weiteren Ausführungsart ist die Schicht aus einem Material, das im flüssigen Zustand aufgedruckt wird und nach dem Aufdrucken fest wird. Der Übergang vom flüssigen in den festen Zustand kann durch chemische und/oder durch physikalische Vorgänge erfolgen. Diese können insbesondere durch Zuführen von Energie gesteuert werden, beispielsweise durch Zuführen von Wärme- oder Strahlungsenergie. Gemäß einer weiteren Ausführungsart ist die Schicht ein Lack oder eine Farbe. Hierfür geeignete Farben und Lacke sind beschrieben in Helmuth Kipphahn, Handbuch der Printmedien: Technologien und Produktionsverfahren, Springer, 2000; Seiten 134 bis 149. Der Lack wird in dieser Anmeldung auch als "Sicherheitslack" bezeichnet.

Gemäß einer weiteren Ausführungsart besteht die Schicht aus nur einer einzigen aufgebrachten Lackschicht. Gemäß einer anderen Ausführungsart besteht die Schicht aus mehreren aufgebrachten Teilschichten, von denen mindestens eine Schicht eine Lackschicht ist.

Gemäß einer weiteren Ausführungsart ist die Schicht ein Wet-Touch-Lack, ein Hammerschlag-Lack, ein Drip-off-Lack, ein mit festen, partikulären Mattierungsmitteln ausgerüsteter Mattlack, ein in Härtestufen mit unterschiedlichen Wellenlängen aushärtbarer UV-Lack oder ein anderer, im getrockneten oder gehärteten Zustand chaotisch angeordnete Strukturen aufweisender Effektlack.

Ein Wet-Touch-Lack ist ein Effektlack, der beim Aushärten aufgrund eines Abstoßungseffektes eine Oberfläche mit Strukturen aufweist, die eine ähnliche Topographie wie eine schlecht oder normal mit Wasser benetzte Oberfläche haben. Beispiele für geeignete Wet-Touch-Lacke sind die von der Firma Schmid Rhyner AG, CH-8134 Adliswil-Zürich mit den Markenbezeichnungen WESSCO 2830 und WESSCO 3830 vertriebene Lacke. Diese Lacke sind geeignet für das Aufdrucken durch Flexodruck. Hierbei ist die Struktur über die Menge des aufgebrachten Beschichtungsvolumens in dem Sinne steuerbar, dass mit zunehmenden Volumen der Abstoßungseffekt sichtbarer wird. Die aufgetragene Volumenmenge ist über die Ausprägung der Näpfchen der Rasterwalze (Aniloxwalze) steuerbar.

Ein Hammerschlag-Lack ist ein Effektlack, bei dem unverträgliche Silikonöle ein Bindemittel an der Ausbildung eines zusammenhängenden Filmes auf einem Substrat hindern. Vielmehr entstehen aufgrund von lokal verminderter Oberflächenspannung Krater. Um diese Krater herum werden Glimmerpartikel oder Aluteilchen ringförmig angeordnet. Hierdurch entsteht das optische Erscheinungsbild einer Oberfläche, die einer mit einem Hammer bearbeiteten Metalloberfläche ähnlich ist (www.malerblatt.de/Bildung-Karriere/Nachwuchs/Wie-funktioniert-eigentlich-Hammerschlaglack/).

Ein Drip-off-Lack wird in zwei Schritten aufgebracht. Zunächst wird der Bedruckstoff mit einer Offsetdruckfarbe bedruckt, auf die ein spezieller Öldruckmattlack aufgetragen wird, so dass die Offsetdruckfarbe nur teilweise bedeckt ist. Darauf wird wiederum ein Dispersionslack aufgetragen. Dieser perlt auf dem Öldruckmattlack ab, so dass er dort matt erscheint. Der Dispersionslack ist hochglänzend an den Stellen, an denen er direkt auf die Offsetdruckfarbe aufgedruckt ist (http://www.veredelungslexikon.htwk-leipzig.de/de/veredeln-durch-beschichten/lackieren/drip-off-lack/; http://www.actega.de/terra/produkte/effektlacke/drip-off-lacke.html).

Bei einem Lack, der mit festen, partikulären Mattierungsmitteln ausgerüstet ist, stehen diese nach dem Trocknen als "Mikro-Pickel" aus dem Lackfilm heraus und bilden somit eine Mikrostruktur. Die Dimension der Oberflächentopographie wird durch die Partikelgrößen bestimmt (Volkmar Stenzel, Nadine Rehfeld: Funktionelle Beschichtungen, 2013, Vincentz Network, Hannover, Germany, Seiten 22 bis 23).

Ferner kann die Schicht eine ausgehärtete Beschichtung mit in chaotischer Anordnung eingebetteten Partikeln sein. Die Beschichtung kann ein Lack, insbesondere ein lösungsmittelbasierender, UV-aushärtender, elektronenstrahlaushärtender oder anderer energieaushärtender Lack oder eine Druckfarbe, insbesondere eine Pigmente oder Farbstoff enthaltende Druckfarbe, sein. Die Beschichtung kann eine oder mehrere der folgenden Eigenschaften aufweisen: transparent, matt, hochglänzend oder an der Oberfläche strukturiert. Die Partikel können mindestens einen der folgenden Partikeltypen umfassen: Faser, Kugel, Quader, Zylinder, Torus, Scheibe, Kegel, Sattelkörper oder andere geometrische oder nichtgeometrische Körper. Einzelheiten dieser Beschichtung sind in der DE 10 2016 113 426 A1 angegeben.

In mehreren Stufen mit unterschiedlichen Wellenlängen härtbare UV-Lacke bilden in einer ersten Härtungsstufe bei kleinen Wellenlängen mit geringer Eindringtiefe eine vernetzte Schicht an der Oberfläche. Diese bildet durch den Härtungsschrumpf kleine Falten aus. Anschließend wird mit UV-Strahlung höherer Wellenlänge die gesamte Lackschicht durchgehärtet. Die chaotische Oberflächenstruktur wird durch die Wellen an der Oberfläche der oberen Schicht gebildet (Stenzel/Rehfeld, a.a.O., Seite 24).

Ferner kann die Schicht gemäß DE 10 2011 012 274 A1 durch Blasen eines Gases auf die ungehärtete Flüssigkeit mit einer stochastischen Oberflächen-Strukturierung versehen sein.

Gemäß einer weiteren Ausführungsart ist der Produktcode ein QR-Code, ein Barcode oder ein alphanumerischer Code. Ein QR-Code ist ein zweidimensionaler Code, der in einem Datenteil die kodierten Daten in redundanter Form enthält und in nur drei Ecken ein bestimmtes Muster zur Positionserkennung aufweist. Die Darstellungsform ist eine quadratische Matrix aus schwarzen und weißen Quadraten, die die kodierten Daten binär darstellen. Zum Schutz der Daten wird ein fehlerkorrigierender Code verwendet. Es gibt verschiedene Standards, die insbesondere im europäischen Patent EP 0 672 974 B1 und in der ISO/IEC 18004:2006 beschrieben sind. Lesegeräte zum Lesen von QR-Codes verfügen über eine Digitalkamera und einen Decoder. Vielfach weisen sie eine Zielhilfe auf, welche das Lesefeld anzeigt.

Ein Barcode oder Strichcode besteht aus parallel angeordneten Strichen und Abständen zwischen den Strichen. Er kann mit optischen Eingabegeräten wie Lichtstift, Scanner und Kamera mit Fotodiodenzeile oder CCD gelesen werden. Die Striche und Lücken verursachen Hell-Dunkel-Signale, die von den Eingabegeräten in elektrische Impulsfolgen umgewandelt werden. Diese werden decodiert und über genormte Schnittstellen in entsprechende Computer eingegeben. Der Strichcode ist in der internationalen Norm ISO/IEC 15420 genormt.

Sonderfarben außerhalb des CMYK-Farbraumes sind insbesondere violette, blaue, grüne und orange Farben. Hierbei handelt es sich um solche speziellen violetten, blauen, grünen und orangen Farben, die im Unterschied zu anderen violetten, blauen, grünen oder orangen Farben nicht mittels der Standardfarben CMYK darstellbar sind, sodass sie nicht in den CMYK-Farbraum fallen. Gemäß einer bevorzugten Ausführungsart werden für die Farben reine Farben verwendet, d.h. Farben, die vor dem Drucken bereits vorgemischt sind und nicht erst durch Übereinanderdrucken oder Nebeneinanderdrucken mehrerer verschiedener Farben erzeugt werden.

Gemäß einer weiteren Ausführungsart fällt die Sonderfarbe nicht in einen erweiterten Farbraum, der gegenüber dem CMYK-Farbraum um bestimmte grüne, orange und violette Farben erweitert ist. Bei den bestimmten grünen, orangen und violetten Farben handelt es sich um solche Farben, die nicht mittels der Standardfarben CMYK darstellbar sind, sodass sie nicht in den CMYK-Farbraum fallen. Bereits bekannt sind Siebenfarbdrucker, die außer den Standardfarben CMYK bestimmte grüne, orange und violette Farben verwenden, sodass sie einen gegenüber dem CMYK-Farbraum erweiterten Farbraum abdecken. Dieser erweiterte Farbraum wird in dieser Anmeldung auch als "erweiterter CMYK-Farbraum" bezeichnet. Sonderfarben, die nicht in diesen erweiterten CMYK-Farbraum fallen, sind nicht mittels Siebenfarbdruckern druckbar, welche die bestimmten grünen, orangen und violetten Farben verwenden. Sie werden in dieser Anmeldung auch als "Sonderfarben außerhalb des erweiterten CMYK-Farbraumes" bezeichnet. Durch diese weitere Einschränkung der Sonderfarbe wird die Sicherheit des Fälschungsschutzes weiter verbessert.

In dieser Anmeldung wird auf die alternative Verwendung von Sonderfarben außerhalb des CMYK-Farbraumes und Sonderfarben außerhalb des erweiterten CMYK-Farbraumes durch die Formulierung "Sonderfarben außerhalb des (erweiterten) CMYK-Farbraumes" hingewiesen.

Gemäß einer weiteren Ausführungsart wird die Farbe des Verpackungsmaterials als Referenzfarbe verwendet oder auf das Verpackungsmaterial mindestens eine Referenzfarbe aufgedruckt, wird die Referenzfarbe gemeinsam mit den chaotisch angeordneten Strukturen, dem Produktcode und der aufgedruckten Sonderfarbe als Information über ein bestimmtes originales Verpackungsmaterial in der Datenbank abgelegt, werden vorzugsweise nach dem Verpacken eines Produkts mit dem Verpackungsmaterial die Referenzfarbe, die chaotisch angeordneten Strukturen, der Produktcode und die aufgedruckte Sonderfarbe mittels einer optoelektronischen Erfassungseinrichtung erfasst, werden diese Informationen zur Authentifizierung des Produktes vorzugsweise über eine Kommunikationseinrichtung an den Rechner übermittelt, ermittelt der Rechner anhand der Referenzfarbe die Lichtverhältnisse, unter denen das Foto gemacht wurde, und nimmt unter Berücksichtigung der Lichtverhältnisse die Überprüfung des Fotos mit den in der Datenbank abgelegten Daten der chaotisch angeordneten Strukturen, des Produktes und der aufgedruckten Sonderfarbe vor. Bei dieser Ausführungsart wird eine Beeinflussung der aufgedruckten Sonderfarbe durch Ausleuchtung bei der Erfassung mittels der optoelektronischen Erfassungseinrichtung, mögliche Reflexionen, Kontraste und die Farbtemperatur der Lichtquelle kompensiert. Infolgedessen können schärfere Kriterien bei der Überprüfung der aufgedruckten Sonderfarbe angewandt und die Fälschungssicherheit weiter erhöht werden.

Gemäß einer weiteren Ausführungsart ist die Referenzfarbe weiße Farbe. Weiße Farbe ist für die Ermittlung der Lichtverhältnisse besonders gut geeignet, da sie sämtliche Farben reflektiert. Die weiße Farbe ist gemäß einer Ausführungsart der Erfindung ein Strich eines als Verpackungsmaterial verwendeten, gestrichenen Papiers oder Kartons oder die Einfärbung einer Folie oder eines Films. Gestrichene Papiere oder Kartone sind ein- oder beidseitig mit einer pigmenthaltigen Streichmasse versehen. Gemäß einer anderen Ausführungsart ist die Referenzfarbe auf das Verpackungsmaterial aufgedruckt. Die Referenzfarbe kann eine beliebige bunte oder unbunte Farbe sein, z.B. CMY oder eine Sonderfarbe.

Gemäß einer weiteren Ausführungsart enthält der Produktcode und/oder der Sicherheitslack und/oder die Sonderfarbe Neon-Pigmente und/oder Iriodin-Pigmente und/oder andere Glanzpigmente. Neon-Pigmente lassen sich nicht über Standard-Farbsysteme nachstellen. Die Glanzpigmente erschweren ein Abfotografieren der Sicherheitsmerkmale zum Zwecke der Produktion von Fälschungen, wodurch die Fälschungssicherheit weiter erhöht wird.

Gemäß einer weiteren Ausführungsart wird die Schicht und/oder der Produktcode ganz oder teilweise in der Sonderfarbe außerhalb des (erweiterten) CMYK-Farbraumes und/oder in der Referenzfarbe auf das Verpackungsmaterial aufgedruckt. Hierdurch kann der Flächenbedarf für die Sicherheitsmerkmale und den Produktcode reduziert werden. Durch die Integration der Sonderfarbe außerhalb des (erweiterten) CMYK-Farbraumes und/oder der Referenzfarbe in die Schicht und/oder den Produktcode wird eine Flächenoptimierung auf dem Verpackungsmaterial begünstigt. Wenn die Schicht und/oder der Produktcode ganz in der Sonderfarbe außerhalb des (erweiterten) CMYK-Farbraumes gedruckt wird, fällt das Aufdrucken dieser Sicherheitsmerkmale zusammen, so dass sie mit nur einem einzigen Druckwerk aufgedruckt werden können.

Gemäß einer bevorzugten Ausführungsart wird die Schicht und/oder der Produktcode ganz in der Sonderfarbe außerhalb des (erweiterten) CMYK-Farbraumes und/oder der Referenzfarbe gedruckt. Gemäß einer anderen Ausführungsart ist nur ein Flächenteil oder ein Teil der Schicht oder nur ein Teil des Produktcodes in der Sonderfarbe außerhalb des (erweiterten) CMYK-Farbraumes und/oder der Referenzfarbe gedruckt.

Gemäß einer bevorzugen Ausführungsart wird die Schicht ganz in der Sonderfarbe außerhalb des (erweiterten) CMYK-Farbraumes gedruckt und wird der Produktcode zumindest teilweise in der Referenzfarbe gedruckt. Gemäß einer anderen Ausführungsart wird die Schicht ganz in der Referenzfarbe und wird der Produktcode zumindest teilweise in der Sonderfarbe außerhalb des (erweiterten) CMYK-Farbraumes gedruckt. Gemäß einer anderen Ausführungsart ist die Referenzfarbe eine nicht bedruckte Teilfläche des Striches eines gestrichenen Verpackungsmaterials oder eine nicht bedruckte Teilfläche einer eingefärbten Folie oder eines eingefärbten Films. Gemäß einer weiteren Ausführungsart ist die nicht bedruckte Teilfläche des Striches oder der Folie oder des Films zwischen der Schicht und dem Produktcode vorhanden oder eine nicht bedruckte Teilfläche innerhalb des Produktcodes, z.B. innerhalb eines QR-Codes.

Gemäß einer weiteren Ausführungsart wird zumindest eine Positionsmarke eines QR-Codes in der Sonderfarbe außerhalb des (erweiterten) CMYK-Farbraumes und/oder der Referenzfarbe gedruckt. Hierdurch kann der Flächenbedarf reduziert und die Fälschungssicherheit erhöht werden.

Gemäß einer weiteren Ausführungsart wird zumindest ein Strichabschnitt eines Barcodes in der Sonderfarbe außerhalb des (erweiterten) CMYK-Farbraumes und/oder der Referenzfarbe gedruckt. Hierdurch kann der Flächenbedarf reduziert und die Fälschungssicherheit erhöht werden.

Gemäß einer weiteren Ausführungsart sind die Schicht, der Produktcode, die Sonderfarbe außerhalb des (erweiterten) CMYK-Farbraumes und gegebenenfalls die Referenzfarbe auf dem Verpackungsmaterial gemeinsam in der Objektebene einer Digitalkamera positionierbar. Dies ist vorteilhaft für das Erfassen der Sicherheitsmerkmale und des Produktcodes mit einer einzigen Fotografie. Die Anwendung des Verfahrens wird hierdurch vereinfacht.

Gemäß einer weiteren Ausführungsart sind die Schicht und der Produktcode an verschiedenen Stellen auf das Verpackungsmaterial aufgedruckt. Gemäß einer weiteren Ausführungsart sind die Schicht und der Produktcode an verschiedenen Stellen aneinander angrenzend auf das Verpackungsmaterial aufgedruckt. Hierdurch kann der Flächenbedarf reduziert und die Fälschungssicherheit erhöht werden.

Gemäß einer weiteren Ausführungsart wird die Schicht in ein Sicherheitsfeld und der Produktcode in ein Kodierungsfeld aufgedruckt, dass angrenzend an dem Sicherheitsfeld angeordnet ist. Hierdurch kann der Flächenbedarf reduziert und die Fälschungssicherheit erhöht werden.

Gemäß einer weiteren Ausführungsart sind das Kodierungsfeld und/oder das Sicherheitsfeld rechteckige Felder. Dies ist insbesondere vorteilhaft bei Ausführungen des Kodierungsfeldes als QR-Code oder Barcode. Ferner ist dies von Vorteil für die Erfassung von Sicherheitsmerkmalen und Produktcode durch eine herkömmliche Digitalkamera.

Eine weitere Ausführungsart umfasst mindestens eines der folgenden Merkmale:
- die Schicht und der Produktcode werden in einem Abstand von maximal 10 mm, vorzugsweise von maximal 5 mm, weiterhin vorzugsweise von maximal 1 mm voneinander auf das Verpackungsmaterial aufgedruckt,
- das Sicherheitsfeld und das Kodierungsfeld werden in einem Abstand von maximal 10 mm, vorzugsweise von maximal 5 mm, weiterhin vorzugsweise von maximal 1 mm voneinander auf das Verpackungsmaterial aufgedruckt,
- das Sicherheitsfeld und das Kodierungsfeld sind quadratische oder kreisrunde Felder,
- das Sicherheitsfeld und das Kodierungsfeld haben eine Kantenlänge oder einen Durchmesser von maximal 12 mm, vorzugsweise von 6 mm.

Gemäß einer weiteren Ausführungsart sind die Schicht und der Produktcode einander überdeckend oder einander überlappend auf das Verpackungsmaterial aufgedruckt. Gemäß einer bevorzugten Ausführungsart wird zunächst die Schicht auf das Verpackungsmaterial aufgedruckt und danach der Produktcode auf die Schicht oder auf das Verpackungsmaterial oder auf die Schicht und auf das Verpackungsmaterial aufgedruckt. Dies erleichtert das Aufdrucken der Schicht bei der Herstellung des Verpackungsmaterials und das Aufdrucken des Produktcodes beim Verpacken des Produktes mit dem Verpackungsmaterial. Grundsätzlich ist es aber auch möglich, Schicht und Produktcode beim Herstellen des Verpackungsmaterials aufzudrucken. Durch das Übereinanderdrucken von Schicht und Produktcode wird der Flächenbedarf weiter reduziert und die Fälschungssicherheit erhöht.

Gemäß einer weiteren Ausführungsart ist die Schicht, die Sonderfarbe außerhalb des (erweiterten) CMYK-Farbraumes und wahlweise die Referenzfarbe in den Produktcode integriert. Gemäß einer weiteren Ausführungsart ist der Produktcode ein QR-Code, wobei zumindest eine Positionsmarke durch die aufgedruckte Schicht gebildet ist. Ferner ist zumindest eine Positionsmarke durch die aufgedruckte Sonderfarbe außerhalb des (erweiterten) CMYK-Farbraumes gebildet. Vorzugsweise wird mindestens eine Positionsmarke durch eine Schicht in der Sonderfarbe gebildet. Gemäß einer weiteren Ausführungsart ist mindestens eine Positionsmarke durch eine Referenzfarbe gebildet. Gemäß einer weiteren Ausführungsart ist mindestens eine Positionsmarke durch einen Schicht in einer Referenzfarbe gebildet. Bei diesen Ausführungsarten können Positionsmarken des QR-Codes mittels Schicht, Sonderfarbe außerhalb des (erweiterten) CMYK-Farbraumes und gegebenenfalls Referenzfarbe beim Hersteller des Verpackungsmaterials gedruckt werden und der Datenteil des QR-Codes beim Befüller aufgedruckt werden.

Gemäß einer weiteren Ausführungsart ist die optische Erfassungseinrichtung und die Kommunikationseinrichtung ein Mobiltelefon, Smartphone, Tablet, Personal Digital Assistant oder ein anderes Mobilgerät mit Digitalkamera und Zugang zum Internet, z.B. über Mobiltelefonnetz und/oder WLAN (WiFi). Hierdurch wird eine Überprüfung der Sicherheitsmerkmale und des Produktcodes durch den Handel oder den Abnehmer vereinfacht. Die Digitalkamera wird für die Erfassung der Sicherheitsmerkmale und des Produktcodes verwendet. Über das Mobiltelefonnetz und/oder WLAN werden die erfassten Informationen an den Rechner im Internet kommuniziert. Übliche Mobilgeräte können hierfür verwendet werden.

Gemäß einer weiteren Ausführungsart ist das Verpackungsmaterial ein aus dem bedruckbaren Substrat hergestellter Zuschnitt zum Bilden einer Faltschachtel oder ein aus dem bedruckbaren Substrat gebildeter Beutel oder Tasche oder ein aus dem bedruckbaren Substrat gebildeter Aufkleber (Sticker) oder ein Etikett(Label). Gemäß einer weiteren Ausführungsart ist die Faltschachtel so ausgebildet, dass das Produkt nicht ohne Zerstörung der Faltschachtel aus dieser entnehmbar ist. Das Etikett, der Label oder der Aufkleber sind gemäß einer weiteren Ausführungsart so ausgebildet, dass sie nicht zerstörungsfrei von einem Produkt oder einer Produktverpackung lösbar sind.

Gemäß einer weiteren Ausführungsart werden die Schicht, die Sonderfarbe außerhalb des (erweiterten) CMYK-Farbraumes und wahlweise die Referenzfarbe bei der Herstellung des Verpackungsmaterials aufgedruckt, der Produktcode beim Befüllen des Verpackungsmaterials aufgedruckt und die chaotisch angeordneten Strukturen, die Sonderfarbe außerhalb des (erweiterten) CMYK-Farbraumes, der Produktcode und wahlweise die Referenzfarbe beim Befüllen des Verpackungsmaterials erfasst und in die Datenbank eingegeben. Das Aufdrucken der Schicht und der Sonderfarbe außerhalb des (erweiterten) CMYK-Farbraumes und gegebenenfalls der Referenzfarbe erfolgt vorzugsweise beim Hersteller des Verpackungsmaterials, da dieser meist über eine geeignete Druckmaschine verfügt. Das Aufdrucken des Produktcodes und Erfassen der Sicherheitsmerkmale sowie das Ablegen in der Datenbank erfolgt vorzugsweise beim Befüller, da die Daten für den Produktcode beim Befüller anfallen.

Gemäß einer anderen Ausführungsart werden die Schicht, die Sonderfarbe außerhalb des (erweiterten) CMYK-Farbraumes, der Produktcode und wahlweise die Referenzfarbe bei der Herstellung des Verpackungsmaterials aufgedruckt und die chaotisch angeordneten Strukturen, die Sonderfarbe außerhalb des (erweiterten) CMYK-Farbraumes, der Produktcode und wahlweise die Referenzfarbe bei der Herstellung des Verpackungsmaterials oder beim Befüllen des Verpackungsmaterials erfasst und in der Datenbank abgelegt. Bei dieser Ausführungsart wird auch der Produktcode vom Hersteller des Verpackungsmaterials aufgedruckt und die Sicherheitsmerkmale und der Produktcode entweder beim Hersteller des Verpackungsmaterials oder beim Befüller des Verpackungsmaterials erfasst und in der Datenbank abgelegt. Für diese Ausführungsart ist es erforderlich, dass der Befüller dem Hersteller des Verpackungsmaterials entsprechende Informationen über den Produktcode zur Verfügung stellt und das bedruckte Verpackungsmaterial beim Befüllen des Produktes dem Produkt zugeordnet wird, für das der Produktcode gilt.

Für das Aufdrucken des Produktcodes kann der Befüller des Verpackungsmaterials einen Standard-Vierfarbdrucker verwenden, insbesondere einen Laserdrucker oder einen Inkjet-Drucker.

Ferner wird die Aufgabe durch ein gegen Fälschungen geschütztes Produkt gelöst, das die folgenden Merkmale umfasst:
- auf ein Verpackungsmaterial ist eine Schicht aufgedruckt, die als individualisierendes Sicherheitsmerkmal chaotisch angeordnete Strukturen aufweist, die optisch erfassbar sind,
- auf das Verpackungsmaterial ist ein optisch erfassbarer Produktcode aufgedruckt und
- auf das Verpackungsmaterial ist als weiteres Sicherheitsmerkmal mindestens eine Sonderfarbe aufgedruckt, die nicht in den CMYK-Farbraum fällt.

Das gegen Fälschungen geschützte Produkt ist in einem Verfahren mit den Merkmalen 1.4 bis 1.7 von Anspruch 1 verwendbar. Dem Produkt kommen somit die mit dem Verfahren verbundenen vorteilhaften Wirkungen entsprechend zu.

Die nachfolgenden Ausführungsarten des gegen Fälschungen geschützten Produktes weisen die Wirkungen der entsprechenden Ausführungsarten des Verfahrens zum Schützen eines Produktes gegen Fälschungen auf.

Gemäß einer bevorzugten Ausführungsart der Erfindung ist ein Produkt mit dem Verpackungsmaterial verbunden.

Gemäß einer bevorzugten Ausführungsart ist ein Produkt mit dem Verpackungsmaterial verpackt. Gemäß einer anderen Ausführungsart ist das Verpackungsmaterial auf dem Produkt festgeklebt oder auf andere Weise daran fixiert. Durch das Verpackungsmaterial ist das Produkt gegen Fälschungen geschützt.

Gemäß einer weiteren Ausführungsart ist das Verpackungsmaterial ein Zuschnitt zum Herstellen einer Faltschachtel.

Gemäß einer weiteren Ausführungsart ist das gegen Fälschungen geschützte Produkt in einer aus dem Verpackungsmaterial gebildeten Faltschachtel enthalten.

Gemäß einer weiteren Ausführungsart ist das Verpackungsmaterial ein Karton, Pappe, Papier, Kunststofffolie, Metallfolie, Verbundfolie oder ein anderes flexibles Flachmaterial. Gemäß einer weiteren Ausführungsart umfasst das Verpackungsmaterial mindestens eine Schicht ausgewählt aus den folgenden Materialien: Papier, Karton, Pappe, Kunststoff oder Metall.

Gemäß einer weiteren Ausführungsart besteht die Schicht aus nur einer einzigen aufgebrachten Lackschicht. Gemäß einer anderen Ausführungsart besteht die Schicht aus mehreren aufgebrachten Teilschichten, von denen mindestens eine Teilschicht eine Lackschicht ist.

Gemäß einer weiteren Ausführungsart ist die Schicht ein Wet-Touch-Lack, ein Hammerschlag-Lack, ein Drip-off-Lack, ein mit festen, partikulären Mattierungsmitteln ausgerüsteter Mattlack, ein in Härtestufen mit unterschiedlichen Wellenlängen aushärtbarer UV-Lack oder ein anderer, im getrockneten oder gehärteten Zustand chaotisch angeordnete Mikrostrukturen aufweisender Effektlack.

Gemäß einer weiteren Ausführungsart ist die Sonderfarbe außerhalb des CMYK-Farbraumes eine reine Farbe, die vor dem Drucken bereits fertig gemischt ist. Die Sonderfarbe außerhalb des CMYK-Farbraumes wird somit nicht durch übereinander gedruckte oder nebeneinander gedruckte verschiedene Farben erzeugt.

Gemäß einer weiteren Ausführungsart fällt die Sonderfarbe nicht in einen Farbraum, der gegenüber dem CMYK-Farbraum um bestimmte grüne, orange und violette Farben erweitert ist.

Gemäß einer weiteren Ausführungsart weist das Verpackungsmaterial mindestens eine Referenzfarbe auf. Gemäß einer weiteren Ausführungsart ist die Referenzfarbe eine Farbe des Verpackungsmaterials oder ist die Referenzfarbe auf das Verpackungsmaterial aufgedruckt. Gemäß einer weiteren Ausführungsart ist die Referenzfarbe eine nicht bedruckte Teilfläche eines Striches eines als Verpackungsmaterial verwendeten, gestrichenen Kartons oder Papiers oder ist die Referenzfarbe auf das Verpackungsmaterial aufgedruckt.

Gemäß einer anderen Ausführungsart ist die Referenzfarbe zwischen Schicht und Produktcode und/oder innerhalb des Produktcodes und/oder neben der Schicht und/oder dem Produktcode angeordnet.

Gemäß einer weiteren Ausführungsart enthält der Produktcode und/oder die Schicht und/oder die Sonderfarbe außerhalb des (erweiterten) CMYK-Farbraumes Neon-Pigmente und/oder Iriodin-Pigmente und/oder andere Glanzpigmente.

Gemäß einer weiteren Ausführungsart ist die Schicht und/oder der Produktcode ganz oder teilweise in der Sonderfarbe außerhalb des (erweiterten) CMYK-Farbraumes und/oder der Referenzfarbe gedruckt.

Gemäß einer weiteren Ausführungsart sind die Schicht, der Produktcode, die Sonderfarbe außerhalb des (erweiterten) CMYK-Farbraumes und gegebenenfalls die Referenzfarbe auf dem Verpackungsmaterial gemeinsam in der Objektebene einer Digitalkamera positionierbar.

Gemäß einer weiteren Ausführungsart ist zumindest eine Positionsmarke eines QR-Codes in der Sonderfarbe außerhalb des (erweiterten) CMYK-Farbraumes und/oder der Referenzfarbe gedruckt.

Gemäß einer weiteren Ausführungsart sind die Schicht und der Produktcode an verschiedenen Stellen auf das Verpackungsmaterial aufgedruckt.

Gemäß einer weiteren Ausführungsart ist zumindest ein Strichabschnitt eines Barcodes in der Sonderfarbe außerhalb des (erweiterten) CMYK-Farbraumes und/oder der Referenzfarbe gedruckt.

Gemäß einer weiteren Ausführungsart sind die Schicht und der Produktcode aneinander angrenzend auf das Verpackungsmaterial aufgedruckt.

Gemäß einer weiteren Ausführungsart ist die Schicht in ein Sicherheitsfeld und der Produktcode in ein Kodierungsfeld aufgedruckt, das angrenzend an dem Sicherheitsfeld angeordnet ist.

Gemäß einer weiteren Ausführungsart sind das Kodierungsfeld und/oder das Sicherheitsfeld rechteckige Felder.

Eine weitere Ausführungsart umfasst mindestens eines der folgenden Merkmale:
- die Schicht und der Produktcode sind in einem Abstand von maximal 10 mm, vorzugsweise von maximal 5 mm, weiterhin vorzugsweise von maximal 1 mm voneinander auf das Verpackungsmaterial aufgedruckt,
- das Sicherheitsfeld und das Kodierungsfeld sind in einem Abstand von maximal 10 mm, vorzugsweise von maximal 5 mm, weiterhin vorzugsweise von maximal 1 mm voneinander auf das Verpackungsmaterial aufgedruckt,
- das Sicherheitsfeld und das Kodierungsfeld sind quadratische oder kreisrunde Felder,
- das Sicherheitsfeld und das Kodierungsfeld haben eine Kantenlänge oder einen Durchmesser von maximal 12 mm, vorzugsweise von maximal 6 mm.

Gemäß einer weiteren Ausführungsart sind die Schicht und der Produktcode einander vollständig überdeckend oder einander überlappend auf das Verpackungsmaterial aufgedruckt. Gemäß einer weiteren Ausführungsart ist die Schicht auf das Verpackungsmaterial aufgedruckt und ist der Produktcode auf die Schicht oder auf die Schicht und das Verpackungsmaterial aufgedruckt.

Gemäß einer weiteren Ausführungsart ist die Schicht in den Produktcode integriert.

Die Erfindung wird nachfolgend anhand der anliegenden Zeichnungen von Ausführungsbeispielen näher erläutert. In den Zeichnungen zeigen:
- Fig. 1: QR-Code und Sicherheitslack in einer Draufsicht;
- Fig. 2: Druckmaschine mit Lackierwerk zum Aufbringen des Sicherheitslackes im Flexodruckverfahren in einer Seitenansicht;
- Fig. 3: Lackierwerk der Druckmaschine in einer Detailansicht;
- Fig. 4: bedrucktes Substrat in eine Perspektivansicht von der Seite;
- Fig. 5: Drucken des Produktcodes und Erfassen und Ablegen von Sicherheitsmerkmalen sowie Produktcode in einem Cloudserver in einem Grobschema;
- Fig. 6: Faltschachtel mit Sicherheitskennzeichnung und Smartphone in einem Grobschema;
- Fig. 7: Gesamtprozess zur Verifikation von Originalprodukten in einem Grobschema;
- Fig. 8: Verpackungsmaterial und Mobilgerät zum Erfassen von auf das Verpackungsmaterial aufgedruckten Sicherheitsmerkmalen und Produktcode in einem Grobschema;
- Fig. 9: eine andere Sicherheitskennzeichnung auf einem Aufkleber in der Draufsicht.

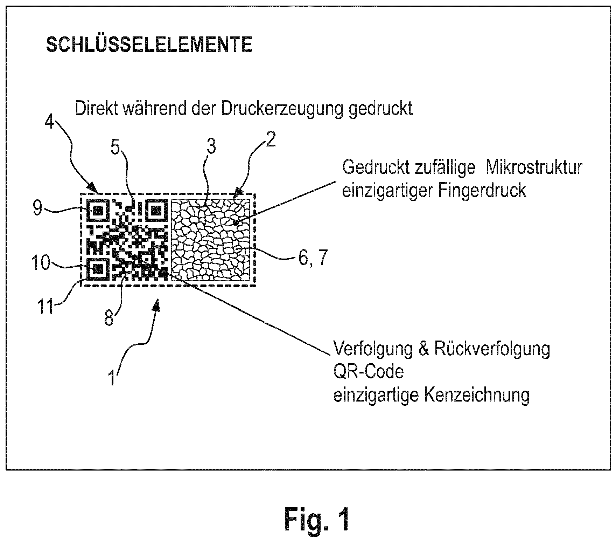

Gemäß Fig. 1 umfasst eine Sicherheitskennzeichnung 1 eine Schicht 2 in einem Sicherheitsfeld 3 und daran angrenzend einen QR-Code 4 in einem Kodierungsfeld 5. Der QR-Code 4 ist ein Produktcode.

Das Sicherheitsfeld 3 und das Kodierungsfeld 5 sind jeweils quadratisch mit einer Kantenlänge von z.B. 6 mm.

Die Schicht 2 weist als individualisierendes Sicherheitsmerkmal chaotisch angeordnete Mikrostrukturen 6 auf und als weiteres Sicherheitsmerkmal eine Sonderfarbe 7 außerhalb des CMYK-Farbraums. Beispielsweise handelt es sich bei der Schicht 2 hierbei um einen UV-härtbaren Wet-Touch-Lack mit der Produktbezeichnung WESSCO 2830 der Firma Schmid Rhyner AG. In diesen Lack wird eine vorgemischte Reinfarbe als Sonderfarbe 7 eingemischt. Hierbei handelt es sich beispielsweise um die Patronenfarbe "Reflex-Blue c" . Die Schicht 2 wird auch als "Sicherheitslack" bezeichnet.

Der QR-Code 4 enthält in einem Datenteil 8 die kodierten Daten in redundanter Form. In drei seiner Ecken ist jeweils eine quadratische Positionsmarke 9 mit einem Quader 10 und einem diesen umgebenden quadratischen Rahmen 11 angeordnet. Der QR-Code 4 kann insgesamt in schwarzer Farbe aufgedruckt sein. Ferner können die Positionsmarken 9 und/oder der Datenteil 8 in einer Sonderfarbe 7 aufgedruckt sein.

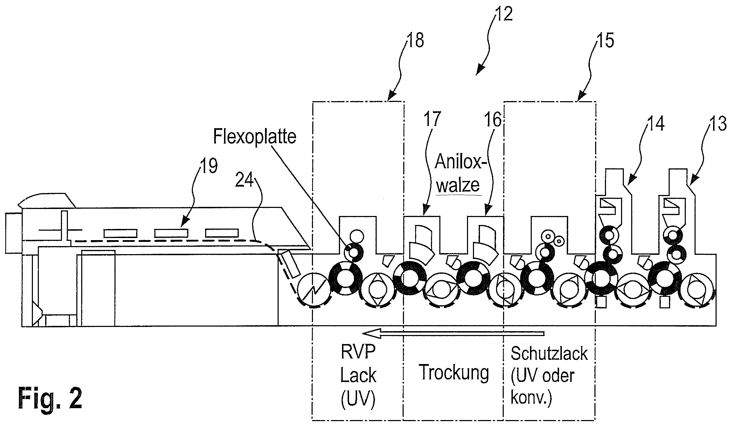

Gemäß Fig. 2 wird das Verpackungsmaterial in einer Druckmaschine 12 mit Farbdruckwerken 13, 14, einem ersten Lackierwerk 15 zum Aufdrucken eines Schutzlackes, Trocknungsstationen 16, 17, einem zweiten Lackierwerk 18 zum Aufdrucken der Schicht 2 und einer UV-Trocknungsstation 19 zum Aushärten der Schicht 2 bedruckt. Bei den Farbwerken 13, 14 handelt es sich um Tiefdruckwerke.

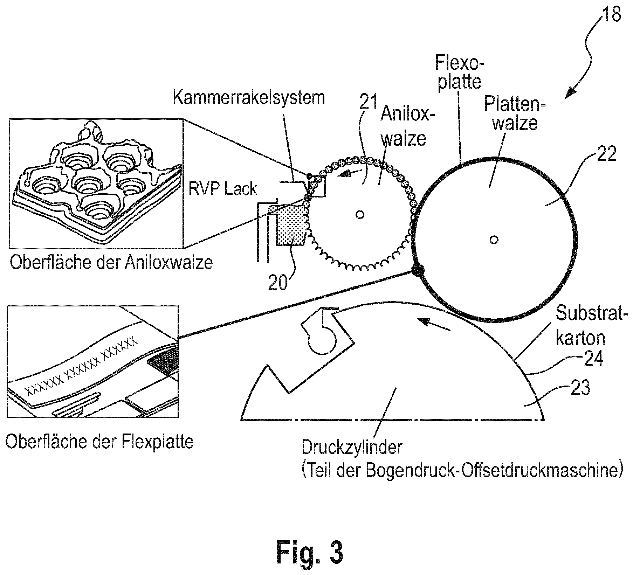

Das zweite Lackierwerk 18 ist gemäß Fig. 3 ein Flexodrucklackierwerk mit Kammerakelsystem 20, Rasterwalze 21, Druckformzylinder 22 und Gegendruckzylinder 23.

Mittels der Farbdruckwerke 13, 14 und nicht gezeigter weiterer Farbdruckwerke werden Druckfarben aufgedruckt, beispielsweise im Vierfarbdruck die Farben CMYK.

In dem ersten Lackierwerk 15 wird ein Schutzlack auf die Druckfarben aufgedruckt. In den nachfolgenden Trocknungsstationen 16, 17 wird der Schutzlack getrocknet. In dem zweiten Lackierwerk 18 wird die Schicht 2 aufgedruckt. Die Schicht 2 enthält die Sonderfarbe 7. Die Auftragsmenge wird durch Auswahl der Rasterwalze 21 gesteuert.

In der nachfolgenden UV-Trocknungsstation 19 wird die Schicht 2 getrocknet.

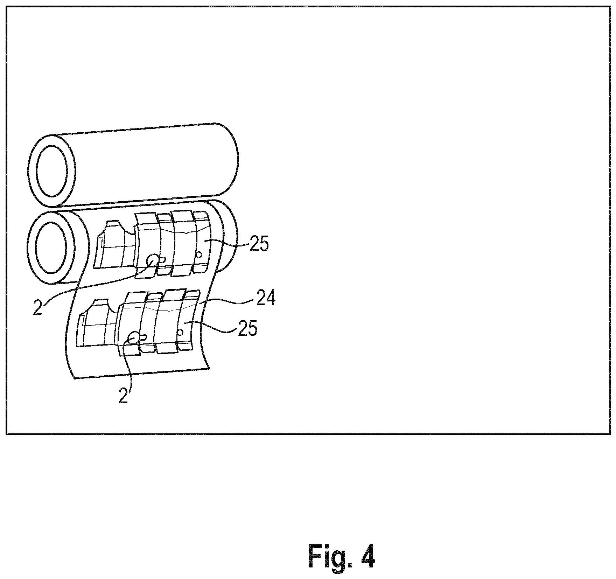

Das zu bedruckende Substrat 24 ist ein Bahnmaterial aus Karton. Gemäß Fig. 4 sind auf das Substrat 24 aufeinanderfolgend die Aufdrucke von Zuschnitten 25 für eine Faltschachtel aufgedruckt. Die Schicht 2 ist jeweils am unteren Rand einer Seitenwand aufgedruckt. Die Zuschnitte 25 werden durch eine oder mehrere der Operationen Rillen, Stanzen, Prägen, Falten, Kleben weiter bearbeitet, aus dem Bahnmaterial herausgelöst und gegebenenfalls vorgeklebt. Die Zuschnitte 25 sind Verpackungsmaterialien.

Vom Hersteller des Verpackungsmaterials werden die Zuschnitte 24 flach übereinanderliegend in Stapeln an den Befüller geliefert. Der Befüller richtet die Zuschnitte 24 auf, befüllt sie mit Produkt und schließt sie, vorzugsweise durch Verkleben.

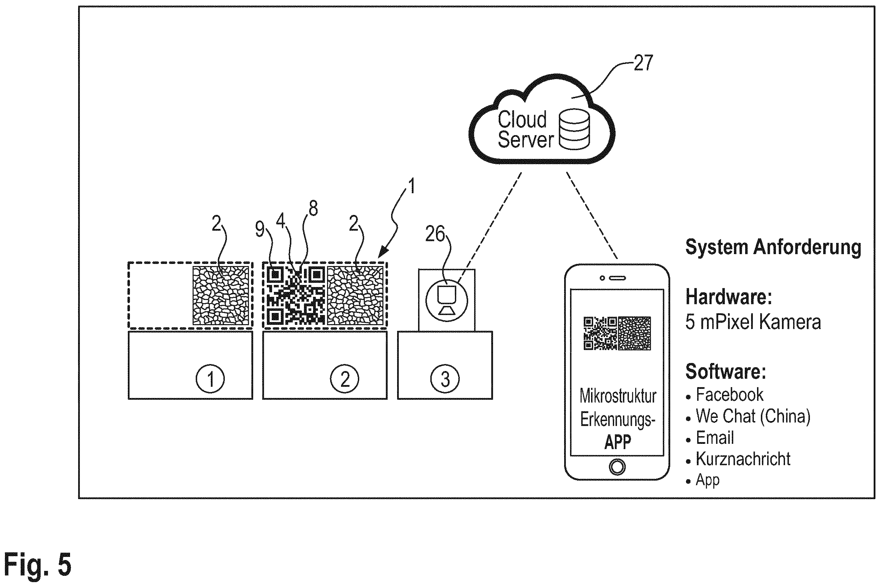

Gemäß Fig. 5 wird der QR-Code 4 beim Befüller mittels eines Standard-Vierfarbdruckers (z.B. Inkjet-Drucker oder Laserdrucker) aufgedruckt. Gegebenenfalls wird vom Befüller nur der Datenteil aufgedruckt und werden die Positionsmarkierungen 9 bereits beim Hersteller des Verpackungsmaterials aufgedruckt, z.B. in einer Sonderfarbe oder in einer Referenzfarbe.

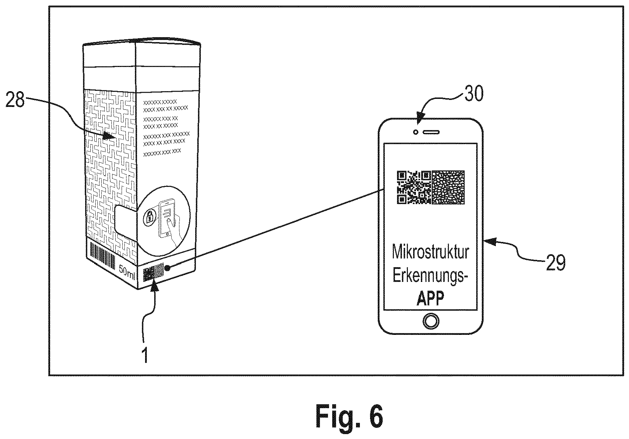

Gemäß Fig. 5 und 6 wird die Sicherheitskennzeichnung 1 mittels einer Kamera 26 erfasst und im Datenspeicher eines Cloudservers 27 abgelegt. Wenn die Sicherheitskennzeichnung 1 komplett beim Hersteller des Verpackungsmaterials erzeugt wird, kann dies schon bei diesem erfolgen. Andernfalls wird die Erfassung und die Abspeicherung beim Befüller vorgenommen.

Die fertige Faltschachtel 28 mit der Sicherheitskennzeichnung 1 am unteren Rand ist in Fig. 6 gezeigt. Mittels eines Smartphones 29 mit einer Digitalkamera 30 und App ist die Sicherheitskennzeichnung 1 lesbar.

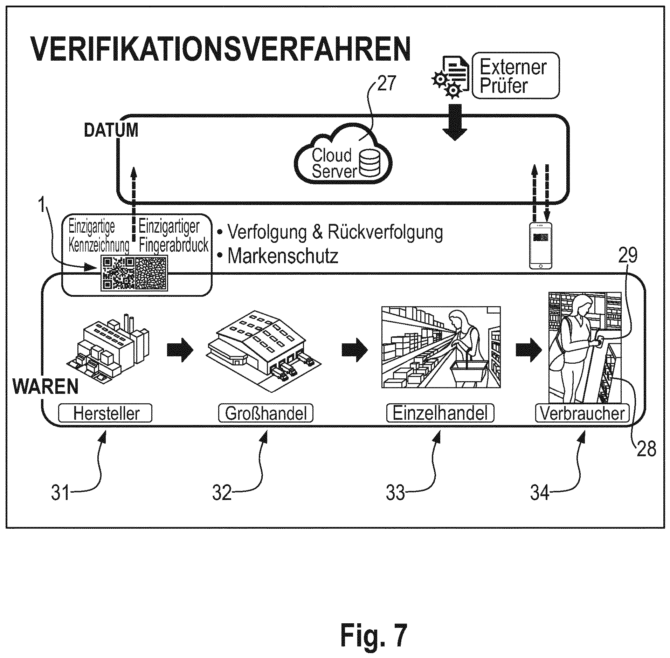

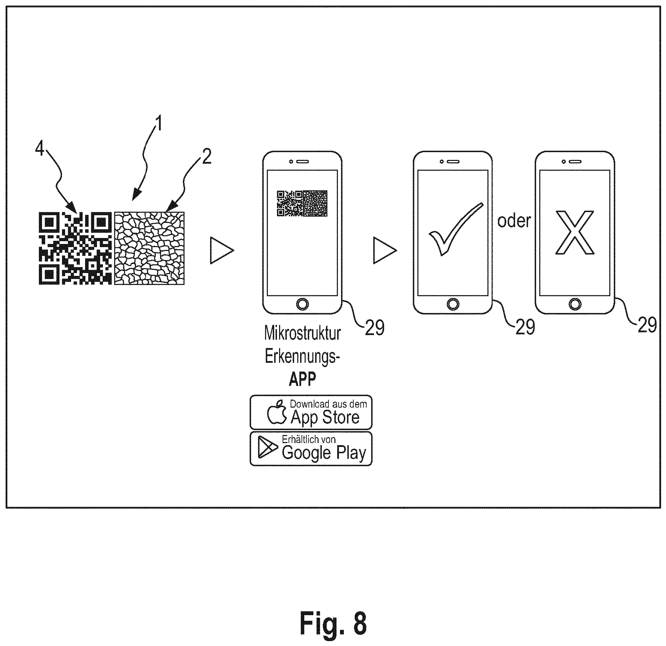

Gemäß Fig. 7 gelangen die vom Hersteller des Produktes und Befüller 31 in Faltschachteln 28 mit der Sicherheitskennzeichnung 1 eingepackten Produkte beispielsweise über den Großhandel 32 oder den Einzelhandel 33 an den Verbraucher 34. Der Verbraucher 34 kann vor dem Erwerb mittels Smartphone 24 die Sicherheitskennzeichnung 1 abfotografieren und an den Cloudserver 27 zur Authentifizierung übersenden. Vom Cloudserver 27 erhält das Smartphone 29 Nachricht, ob der Artikel echt ist oder gefälscht (Fig. 8).

Alternativ wird die Überprüfung beim Scannen der Sicherheitskennzeichnung 1 an der Registrierkasse vorgenommen.

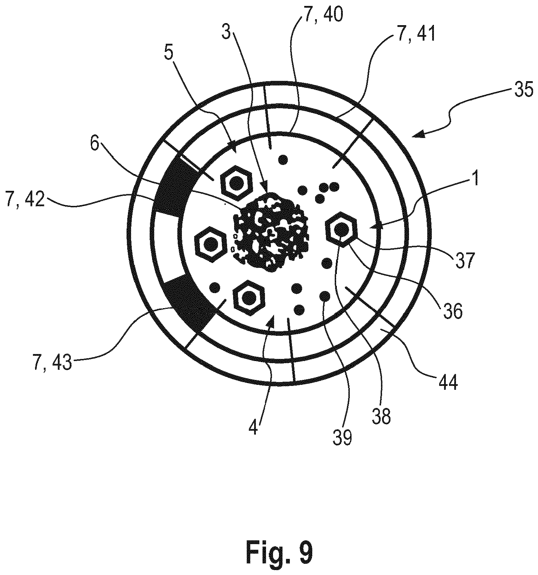

Gemäß Fig. 9 umfasst eine Sicherheitskennzeichnung 1 auf einem Aufkleber 35 in einem hexagonalen Sicherheitsfeld 3 als individualisierendes Sicherheitsmerkmal eine Schicht 2 chaotisch angeordnete Strukturen 6 in Form von schwarzen und weißen Flächen mit Abmessungen im Bereich von einem bis 1.000 µm. Diese Flächen können Quadrate sein, die auf einem vorgegebenen Raster positioniert sein können, ähnlich wie bei den kodierten Daten eines QR-Codes, die auf einer quadratischen Matrix angeordnet sind. Die schwarzen Flächen sind mit Druckfarbe auf den Aufkleber 35 aus einem weißen Karton aufgedruckt, das die weißen Flächen bildet. Die schwarzen und weißen Flächen sind optisch erfassbar.

Die Sicherheitskennzeichnung 1 umfasst zusätzlich zu dem Sicherheitsfeld 3 in einem Kodierungsfeld 5 einen Produktcode 4. Dieser wird durch eine Anordnung von in schwarzer Farbe auf den Aufkleber 35 aufgedruckten Figuren 36 mit jeweils einem hexagonalen Rahmen 37 und einem zentralen Punkt 38 sowie außerhalb der Figuren 36 aufgedruckten schwarzen Punkten 39 gebildet.

Als weiteres Sicherheitsmerkmal sind auf dieselbe Seite des Aufklebers 35 zwei konzentrische Kreisringe 40, 41 in neon-oranger Sonderfarbe 7 aufgedruckt. Der innere Kreisring 40 umgrenzt das Sicherheitsfeld 3 und das Kodierungsfeld 5.

Der innere Kreisring 40 und der äußere Kreisring 41 sind über zwei Ringsegmente 42, 43 in derselben neon-orangen Sonderfarbe 7 miteinander verbunden, die etwa in 8-Uhr-und in 10-Uhr-Stellung angeordnet sind.

Das Neon-Orange ist eine Sonderfarbe 7, die nicht in den CMYK-Farbraum fällt.

Der Aufkleber 35 ist ein Verpackungsmaterial.

Der Aufkleber 35 ist vorzugsweise auf der Rückseite mit einem druckempfindlichen Kleber zum Aufkleben auf einem Produkt versehen. Der Aufkleber 35 ist vorzugsweise so beschaffen, dass er nicht zerstörungsfrei von dem Produkt ablösbar ist. Hierfür ist der Klebstoff entsprechend gewählt. Vorzugsweise weist hierfür zusätzlich der Aufkleber 35 am Umfang radial erstreckte Schlitze 44 auf.

## Patentansprüche

1. Verfahren zum Schützen eines Produkts gegen Fälschungen umfassend die folgenden Schritte:
1.1 auf ein Verpackungsmaterial (25, 35) wird eine Schicht (2) gedruckt, die als individualisierendes Sicherheitsmerkmal chaotisch angeordnete Strukturen (6) aufweist, die optisch erfassbar sind,
1.2 auf das Verpackungsmaterial (25, 35) wird ein optisch erfassbarer Produktcode (4) gedruckt, **dadurch gekennzeichnet, dass**
1.3 auf das Verpackungsmaterial (25, 35) als weiteres Sicherheitsmerkmal mindestens eine Sonderfarbe (7) gedruckt wird, die nicht in den CMYK-Farbraum fällt, wobei mit CMYK-Farbraum die mittels der standardisierten Grundfarben CMYK darstellbaren Farben bezeichnet werden,
1.4 die chaotisch angeordneten Strukturen (6) und der Produktcode (4) auf dem Verpackungsmaterial (25, 35) erfasst und mit der Sonderfarbe (7) als Information über ein bestimmtes originales Verpackungsmaterial (25, 35) in einer Datenbank abgelegt werden,
1.5 die chaotisch angeordneten Strukturen (6), der Produktcode (4) und die Sonderfarbe (7) auf dem Verpackungsmaterial (25, 35) mittels einer optoelektronischen Erfassungseinrichtung (30) erfasst werden,
1.6 die in Schritt 1.5 erfassten Informationen zur Authentifizierung des Produktes an einen Rechner übermittelt werden und der Rechner unter Rückgriff auf die Datenbank überprüft, ob die mittels der optoelektronischen Erfassungseinrichtung (30) erfassten Informationen mit den in der Datenbank abgelegten Informationen für ein bestimmtes originales Verpackungsmaterial (25, 35) übereinstimmen.

2. Verfahren nach Anspruch 1, bei dem vor Schritt 1.5. ein Produkt mit dem Verpackungsmaterial (25, 35) verpackt wird.

3. Verfahren nach einem der Ansprüche 1 oder 2, bei dem in Schritt 1.6 die Informationen über eine drahtlose oder drahtgebundene Kommunikationseinrichtung (24) an den Rechner übermittelt werden und/oder das Ergebnis der Überprüfung durch den Rechner an eine drahtlose oder drahtgebundene Kommunikationseinrichtung (24) übermittelt wird.

4. Verfahren nach einem der Ansprüche 1 bis 3, bei dem die Schicht (2) ein Wet-Touch-Lack, ein Hammerschlag-Lack, ein Drip-off-Lack, ein mit festen, partikulären Mattierungsmitteln ausgerüsteter Lack, ein in mehreren Stufen mit unterschiedlichen Wellenlängen aushärtbarer UV-Lack oder ein anderer Effektlack ist, der im aufgedruckten Zustand chaotisch angeordnete Strukturen aufweist.

5. Verfahren nach einem der Ansprüche 1 bis 4, bei dem der Produktcode (4) ein QR-Code, ein Barcode oder ein alphanumerischer Code ist.

6. Verfahren nach einem der Ansprüche 1 bis 5, bei dem die Sonderfarbe (7) nicht in einen erweiteren Farbraum fällt, der gegenüber dem CMYK-Farbraum um bestimmte grüne, orange und violette Farben erweitert ist und der als erweiterter CMYK-Farbraum bezeichnet wird.

7. Verfahren nach einem der Ansprüche 1 bis 6, bei dem die Farbe des Verpackungsmaterials (25, 35) als Referenzfarbe verwendet oder auf das Verpackungsmaterial mindestens eine Referenzfarbe aufgedruckt wird, die Referenzfarbe gemeinsam mit den chaotisch angeordneten Strukturen (6), dem Produktcode (4) und der Sonderfarbe (7), die nicht in den CMYK-Farbraum oder den erweiterten CMYK-Farbraum fällt, in der Datenbank abgelegt werden, die Referenzfarbe, die chaotisch angeordneten Mikrostrukturen, der Produktcode und die Sonderfarbe (7), die nicht in den CMYK-Farbraum oder den erweiterten CMYK-Farbraum fällt, mittels der optoelektronischen Erfassungseinrichtung (30) in Form eines Fotos erfasst werden, diese Informationen zur Authentifizierung des Produktes an einen Rechner übermittelt werden, der Rechner anhand der Referenzfarbe die Lichtverhältnisse ermittelt, unter denen das Foto gemacht wurde und unter Berücksichtigung der Lichtverhältnisse die Überprüfung des Fotos mit den in der Datenbank abgelegten Daten der chaotisch angeordneten Strukturen (6), des Produktcodes (4) und der Sonderfarbe (7), die nicht in den CMYK-Farbraum oder den erweiterten CMYK-Farbraum fällt, vornimmt.

8. Verfahren gemäß Anspruch 7, bei dem die Referenzfarbe ein nicht bedruckter Bereich des Striches eines als Verpackungsmaterial (25, 35) verwendeten, gestrichenen Kartons oder Papiers ist oder bei dem die Referenzfarbe die Einfärbung einer als Verpackungsmaterial (25, 35) verwendeten Folie oder eines als Verpackungsmaterial verwendeten Films ist.

9. Verfahren nach einem der Ansprüche 1 bis 8, bei dem der Produktcode (4) und/oder die Schicht (2) Neon-Pigmente und/oder Iriodin-Pigmente und/oder andere Glanzpigmente enthält.

10. Verfahren nach einem der Ansprüche 1 bis 9, bei dem die Schicht (2) und/oder der Produktcode (4) ganz oder teilweise in der Sonderfarbe (7), die nicht in den CMYK-Farbraum oder den erweiterten CMYK-Farbraum fällt, und/oder der Referenzfarbe gedruckt wird.

11. Verfahren nach einem der Ansprüche 5 bis 10, bei dem zumindest eine Positionsmarke (9) eines QR-Codes (4) in der Sonderfarbe (7), die nicht in den CMYK-Farbraum oder den erweiterten CMYK-Farbraum fällt, und/oder der Referenzfarbe gedruckt wird.

12. Verfahren nach einem der Ansprüche 5 bis 11, bei dem zumindest ein Strichabschnitt eines Barcodes in der Sonderfarbe (7), die nicht in den CMYK-Farbraum oder den erweiterten CMYK-Farbraum fällt, und/oder der Referenzfarbe gedruckt wird.

13. Verfahren nach einem der Ansprüche 1 bis 12, bei dem die Schicht (2) und der Produktcode (4) aneinander angrenzend auf das Verpackungsmaterial (25, 35) gedruckt werden.

14. Verfahren nach einem der Ansprüche 1 bis 13 umfassend mindestens eines der folgenden Merkmale:
- die Schicht (2) und der Produktcode (4) werden in einem Abstand von maximal 10 mm voneinander auf das Verpackungsmaterial (25, 35) gedruckt,
- das Sicherheitsfeld (3) und das Kodierungsfeld (5) werden in einem Abstand von maximal 10 mm voneinander auf das Verpackungsmaterial (25, 35) gedruckt,
- die Schicht (2) in ein Sicherheitsfeld (3) und der Produktcode (4) in ein Kodierungsfeld (5) gedruckt wird, das angrenzend an dem Sicherheitsfeld (3) angeordnet ist,
- das Kodierungsfeld (5) und/oder das Sicherheitsfeld (3) ist/sind rechteckige oder kreisrunde Felder,
- das Sicherheitsfeld (3) und das Kodierungsfeld (5) sind quadratische Felder,
- das Sicherheitsfeld und das Kodierungsfeld (5) haben einen Durchmesser von maximal 10 mm.

15. Verfahren nach einem der Ansprüche 1 bis 14, bei dem die Schicht (2), die Sonderfarbe (7) und bei der Herstellung des Verpackungsmaterials (25, 35) aufgedruckt werden, der Produktcode (4) beim Befüllen des Verpackungsmaterials (25, 35) aufgedruckt wird und die chaotisch angeordneten Strukturen, die Sonderfarbe (7), die nicht in den CMYK-Farbraum oder den erweiterten CMYK-Farbraum fällt, der Produktcode (4) beim Befüllen des Verpackungsmaterials (25, 35) erfasst und in die Datenbank eingegeben werden.

16. Verfahren nach einem der Ansprüche 1 bis 14, bei dem die Schicht (2), die Sonderfarbe (7), die nicht in den CMYK-Farbraum oder den erweiterten CMYK-Farbraum fällt, der Produktcode (4) und wahlweise die Referenzfarbe bei der Herstellung des Verpackungsmaterials (25, 35) aufgedruckt werden und die chaotisch angeordneten Strukturen, der Produktcode (4) und wahlweise die Referenzfarbe bei der Herstellung des Verpackungsmaterials (25, 35) oder beim Befüllen des Verpackungsmaterials (25, 35) erfasst und in der Datenbank abgelegt werden.

## Claims

1. A method for protecting a product against counterfeiting, comprising the following steps:
1.1 a layer (2) is printed on a packaging material (25, 35), said layer having chaotically arranged, optically recordable structures (6) as an individualized security feature,
1.2 an optically recordable product code (4) is printed on the packaging material (25, 35),
**characterized in that**
1.3 at least one special color (7) that is not included in the CMYK color space is printed on the packaging material (25, 35) as another security feature, wherein the colors that can be depicted using the standardized basic colors CMYK are termed the CMYK color space,
1.4 the chaotically arranged structures (6) and the product code (4) on the packaging material (25, 35) are recorded and filed in a database with the special color (7) as information on a specific, original packaging material (25, 35),
1.5 the chaotically arranged structures (6), the product code (4) and the special color (7) on the packaging material (25, 35) are recorded by means of an optoelectronic recording apparatus (30),
1.6 the information recorded in step 1.5 is transmitted to a computer for authenticating the product, and the computer checks by accessing the database if the information recorded by means of the optoelectronic recording apparatus (30) corresponds to the information filed in the database for a specific, original packaging material (25, 35).

2. The method according to claim 1, wherein a product is packed with the packaging material (25, 35) before step 1.5.

3. The method according to one of claims 1 or 2, wherein in step 1.6, the information is transmitted via a wireless or wired communication apparatus (24) to the computer, and/or the result of the check is transmitted by the computer to a wireless or wired communication apparatus (24).

4. The method according to one of claims 1 to 3, wherein the layer (2) is a wet-touch lacquer, a hammer finish lacquer, a drip-off lacquer, a lacquer furnished with solid particulate matting agents, a UV lacquer that can be cured in several curing steps with different wavelengths, or another effect lacquer that has chaotically arranged structures in a printed state.

5. The method according to one of claims 1 to 4, wherein the product code (4) is a QR code, a barcode, or an alphanumeric code.

6. The method according to one of claims 1 to 5, wherein the special color (7) is not included in an expanded color space that is expanded with certain green, orange and violet colors in contrast to the CMYK color space and that is termed an expanded CMYK color space.

7. The method according to one of claims 1 to 6, wherein the color of the packaging material (25, 35) is used as a reference color, or at least one reference color is printed onto the packaging material, the reference color is filed in the database together with the chaotically arranged structures (6), the product code (4) and the special color (7) that is not included in the CMYK color space or in the expanded CMYK color space, the reference color, the chaotically arranged microstructures, the product code and the special color (7) that is not included in the CMYK color space or in the expanded CMYK color space are recorded in the form of a photo using the optoelectronic recording apparatus (30), this information for authenticating the product is transmitted to a computer, the computer ascertains the lighting conditions under which the photograph was taken using the reference color and carries out the checking of the photograph using the data filed in the database on the chaotically arranged structures (6), the product code (4) and the special color (7) that is not included in the CMYK color space or in the expanded CMYK color space taking into account the lighting conditions.

8. The method according to claim 7, wherein the reference color is an unprinted region of the coating color of a coated cardboard or paper used as packaging material (25, 35), or wherein the reference color is the coloring of a foil used as packaging material (25, 35), or a film used as packaging material.

9. The method according to one of claims 1 to 8, wherein the product code (4) and/or the layer (2) contain(s) neon pigments, and/or Iriodin pigments and/or other gloss pigments.

10. The method according to one of claims 1 to 9, wherein the layer (2) and/or the product code (4) is printed entirely or partially in the special color (7) that is not included in the CMYK color space or in the expanded CMYK color space, and/or the reference color.

11. The method according to one of claims 5 to 10, wherein at least one position mark (9) of a QR code (4) is printed in the special color (7) that is not included in the CMYK color space or in the expanded CMYK color space, and/or the reference color.

12. The method according to one of claims 5 to 11, wherein at least one bar segment of a barcode is printed in the special color (7) that is not included in the CMYK color space or in the expanded CMYK color space, and/or the reference color.

13. The method according to one of claims 1 to 12, wherein the layer (2) and the product code (4) are printed bordering each other on the packaging material (25, 35).

14. The method according to one of claims 1 to 13, comprising at least one of the following features:
- the layer (2) and the product code (4) are printed at a maximum distance of 10 mm from each other on the packaging material (25, 35),
- the security field (3) and the coding field (5) are printed at a maximum distance of 10 mm from each other on the packaging material (25, 35),
- the layer (2) is printed in a security field (3), and the product code (4) is printed in a coding field (5) that is arranged next to the security field (3),
- the coding field (5) and/or the security field (3) is/are rectangular or circular fields,
- the security field (3) and the coding field (5) are square fields,
- the security field and the coding field (5) have a diameter of a maximum of 10 mm.

15. The method according to one of claims 1 to 14, wherein the layer (2) and the special color (7) are printed while producing the packaging material (25, 35), the product code (4) is printed while filling the packaging material (25, 35), and the chaotically arranged structures, the special color (7) that is not included in the CMYK color space or in the expanded CMYK color space, and the product code (4) are recorded and filed in the database while filling the packaging material (25, 35).

16. The method according to one of claims 1 to 14, wherein the layer (2), the special color (7) that is not included in the CMYK color space or in the expanded CMYK color space, the product code (4) and optionally the reference color are printed while manufacturing the packaging material (25, 35), and the chaotically arranged structures, the product code (4) and optionally the reference color are recorded and filed in the database while producing the packaging material (25, 35) or while filling the packaging material (25, 35).

## Revendications

1. Procédé de protection d'un produit contre des falsifications, comportant les étapes suivantes :
1.1 une couche (2) présentant des structures disposées chaotiquement (6) susceptibles d'être détectées visuellement est imprimée sur un matériau d'emballage (25, 35) en tant que caractéristique de sécurité d'individualisation,
1.2 un code de produit (4) visuellement détectable est imprimé sur le matériau d'emballage (25, 35),
**caractérisé en ce que**
1.3 au moins une couleur spéciale (7) ne faisant pas partie de l'espace de couleurs RVB est imprimée sur le matériau d'emballage (25, 35) en tant qu'autre caractéristique de sécurité, l'espace de couleurs RVB désignant les couleurs susceptibles d'être reproduites au moyen des couleurs de base RVB standardisées,
1.4 les structures disposées chaotiquement (6) et le code de produit (4) sont détectés sur le matériau d'emballage (25, 35) et enregistrés dans une banque de données avec la couleur spéciale (7) en tant qu'information sur un matériau d'emballage (25, 35) original déterminé,
1.5 les structures disposées chaotiquement (6), le code de produit (4) et la couleur spéciale (7) sont détectés sur le matériau d'emballage (25, 35) au moyen d'un dispositif de détection opto-électronique (30),
1.6 les informations détectées à l'étape 1.5 pour l'authentification du produit sont transmises à un ordinateur et l'ordinateur vérifie, en s'appuyant sur la banque de données, si les informations détectées au moyen du dispositif de détection opto-électronique (30) concordent avec les informations enregistrées dans la banque de données pour un matériau d'emballage (25, 35) original déterminé.

2. Procédé selon la revendication 1, dans lequel un produit est emballé avec le matériau d'emballage (25, 35) avant l'étape 1.5.

3. Procédé selon l'une des revendications 1 ou 2, dans lequel, à l'étape 1.6, les informations sont transmises à l'ordinateur par le biais d'un dispositif de communication sans fil ou filaire (24) et/ou le résultat de la vérification est transmis par l'ordinateur à un dispositif de communication sans fil ou filaire (24).

4. Procédé selon l'une des revendications 1 à 3, dans lequel la couche (2) est une peinture humide au toucher, une peinture à effet martelé, une peinture à effet drip-off, une peinture dotée d'agents matifiants particulaires solides, une peinture durcissable aux UV en plusieurs étapes avec différentes longueurs d'onde ou une autre peinture à effets, laquelle présente des structures disposées chaotiquement à l'état imprimé.

5. Procédé selon l'une des revendications 1 à 4, dans lequel le code de produit (4) est un QR-code, un code-barre ou un code alphanumérique.

6. Procédé selon l'une des revendications 1 à 5, dans lequel la couleur spéciale (7) ne fait pas partie d'un espace de couleurs étendu, lequel est étendu à certaines couleurs vertes, oranges et violettes par rapport à l'espace de couleurs RVB et désignée comme espace de couleurs RVB étendu.

7. Procédé selon l'une des revendications 1 à 6, dans lequel la couleur du matériau d'emballage (25, 35) est utilisé comme couleur de référence ou au moins une couleur de référence est imprimée sur le matériau d'emballage, la couleur de référence est enregistrée dans la banque de données, ensemble avec les structures disposées chaotiquement (6), le code de produit (4) et la couleur spéciale (7) ne faisant pas partie de l'espace de couleurs RVB ni de l'espace de couleurs RVB étendu, la couleur de référence, les microstructures disposées chaotiquement, le code de produit et la couleur spéciale (7) ne faisant pas partie de l'espace de couleurs RVB ni de l'espace de couleurs RVB étendu sont détectés sous la forme d'une photo au moyen du dispositif de détection opto-électronique (30), ces informations d'authentification du produit sont transmises à un ordinateur, l'ordinateur détermine, à l'aide de la couleur de référence, les rapports de lumière sous lesquels la photo a été prise et procède, en tenant compte des rapports de lumière, à la vérification de la photo avec les données enregistrées dans la banque de données concernant les structures disposées chaotiquement (6), le code de produit (4) et la couleur spéciale (7) ne faisant pas partie de l'espace de couleurs RVB ni de l'espace de couleurs RVB étendu.

8. Procédé selon la revendication 7, dans lequel la couleur de référence est une zone non imprimée du couchage d'un carton ou d'un papier couché, utilisé en tant que matériau d'emballage (25, 35), ou dans lequel la couleur de référence est la coloration d'une feuille utilisée en tant que matériau d'emballage (25, 35) ou d'un film utilisé en tant que matériau d'emballage.

9. Procédé selon l'une des revendications 1 à 8, dans lequel le code de produit (4) et/ou la couche (2) contient/contiennent des pigments néons et/ou des pigments Iriodin et/ou d'autres pigments brillants.

10. Procédé selon l'une des revendications 1 à 9, dans lequel la couche (2) et/ou le code de produit (4) sont imprimés entièrement ou partiellement dans la couleur spéciale (7) ne faisant pas partie de l'espace de couleurs RVB ni de l'espace de couleurs RVB étendu, et/ou dans la couleur de référence.

11. Procédé selon l'une des revendications 5 à 10, dans lequel au moins une marque de position (9) d'un QR-code (4) est imprimée dans la couleur spéciale (7) ne faisant pas partie de l'espace de couleurs RVB ni de l'espace de couleurs RVB étendu, et/ou dans la couleur de référence.

12. Procédé selon l'une des revendications 5 à 11, dans lequel au moins une section de trait d'un code-barre est imprimée dans la couleur spéciale (7) ne faisant pas partie de l'espace de couleurs RVB ni de l'espace de couleurs RVB étendu, et/ou dans la couleur de référence.

13. Procédé selon l'une des revendications 1 à 12, dans lequel la couche (2) et le code de produit (4) sont imprimés l'un à côté de l'autre sur le matériau d'emballage (25, 35).

14. Procédé selon l'une des revendications 1 à 13, comportant l'une au moins des caractéristiques suivantes :
- la couche (2) et le code de produit (4) sont imprimés à une distance de 10 mm maximum l'un de l'autre sur le matériau d'emballage (25, 35),
- le champ de sécurité (3) et le champ de codage (5) sont imprimés à une distance de 10 mm maximum l'un de l'autre sur le matériau d'emballage (25, 35),
- la couche (2) est imprimée dans un champ de sécurité (3) et le code de produit (4) est imprimé dans un champ de codage (5) disposé de façon adjacente au champ de sécurité (3),
- le champ de codage (5) et/ou le champ de sécurité (3) est/sont des champs rectangulaire(s) ou circulaire(s),
- le champ de sécurité (3) et le champ de codage (5) sont des champs carrés,
- le champ de sécurité et le champ de codage (5) présentent un diamètre de 10 mm maximum.

15. Procédé selon l'une des revendications 1 à 14, dans lequel la couche (2) et la couleur spéciale (7) sont imprimées lors de la fabrication du matériau d'emballage (25, 35), le code de produit (4) est imprimé lors du remplissage du matériau d'emballage (25, 35) et les structures disposées chaotiquement, la couleur spéciale (7) ne faisant pas partie de l'espace de couleurs RVB ni de l'espace de couleurs RVB étendu, et le code de produit (4) sont détectés et saisis dans la banque de données lors du remplissage du matériau d'emballage (25, 35).

16. Procédé selon l'une des revendications 1 à 14, dans lequel la couche (2), la couleur spéciale (7) ne faisant pas partie de l'espace de couleurs RVB ni de l'espace de couleurs RVB étendu, le code de produit (4) et éventuellement la couleur de référence sont imprimés lors de la fabrication du matériau d'emballage (25, 35) et les structures disposées chaotiquement, le code de produit (4) et éventuellement la couleur de référence sont détectés et enregistrés dans la banque de données lors de la fabrication du matériau d'emballage (25, 35) ou lors du remplissage du matériau d'emballage (25, 35).
